# EUROPÄISCHE PATENTSCHRIFT

(11) **EP 3 629 542 B1**
(45) Veröffentlichungstag und Bekanntmachung des Hinweises auf die Patenterteilung: **23.03.2022**
(21) Anmeldenummer: 19198596.9
(22) Anmeldetag: 20.09.2019
(51) Int. Cl.: H04L 29/06

(54) **AUSGEBEN VON VERTRAULICHEN DATEN ÜBER EIN FESTNETZTELEFONS**
OUTPUTTING CONFIDENTIAL DATA VIA A FIXED TELEPHONE
DÉLIVRER DES DONNÉES CONFIDENTIELLES AU MOYEN D'UN TÉLÉPHONE FIXE

(30) Priorität: 28.09.2018 DE 102018124041
(43) Veröffentlichungstag der Anmeldung: 01.04.2020
(73) Patentinhaber: Bundesdruckerei GmbH, 10969 Berlin (DE)
(72) Erfinder: Schwarz, Carsten, 13465 Berlin (DE); Weise, Andreas, 10247 Berlin (DE); Bühler, Gregor, 13467 Berlin (DE)
(74) Vertreter: Bittner, Thomas L.

(56) Entgegenhaltungen:
- WO-A2-02/37240
- FR-A1- 2 794 593
- GB-A- 2 406 925
- GB-A- 2 511 279

## Beschreibung

Die Erfindung betrifft ein Verfahren und eine Vorrichtung zum Ausgeben von vertraulichen Daten über eine Ausgabeeinrichtung eines Festnetztelefons.

### Hintergrund

Bei verschiedenen Anwendungen, die im Rahmen einer Applikation, welche in einem System von Datenverarbeitungseinrichtungen und anderen technischen Geräten, beispielsweise Telefonen, implementiert und ausgeführt wird, ist zur Abgabe einer Willenserklärung einer Person eine sogenannte Zwei-Faktor-Authentifizierung vorgesehen. Hierzu ist mit dem System eine geeignete technische Implementierung bereitzustellen. So ist es beispielsweise bei Anwendungen des Online-Bankings bekannt, dass dem Nutzer, der sich zuvor für das Online-Banking mit seiner persönlichen Identifikationsnummer (PIN) auf der Website der Bank (Dienstleister) angemeldet hat, zum Ausführen einer Überweisung eine Transaktionsnummer (TAN) auf sein Mobiltelefon übermittelt wird, um diese dann über eine dem Nutzer zugeordnete Datenverarbeitungseinrichtung einzugeben und an die Datenverarbeitungseinrichtung des Bankdienstleisters zu übermitteln, so dass nach Prüfung der einen zweiten Faktor darstellenden Transaktionsnummer die Überweisung freigegeben werden kann. Die an das Mobiltelefon übermittelte Nachricht, beispielsweise eine Text-Kurznachricht, stellt hierbei eine vertrauliche Information dar, bei deren Übermittlung an den Nutzer davon ausgegangen wird, dass nur dieser das ihm zugeordnete Mobiltelefon nutzt, so dass Vertraulichkeit gewahrt ist. Nicht immer besteht jedoch die Möglichkeit, den Datenaustausch auf diesem Wege übers Mobiltelefon durchzuführen. So besteht Bedarf, die Übermittlung vertraulicher Daten, beispielsweise im Rahmen der Zwei-Faktor-Authentifizierung auch auf alternative Weise zu gewährleisten.

Das Dokument GB 2 511 279 A beschreibt ein System für das sichere Erhalten über das öffentliche Telefonnetz einer Multi-Faktor-Identität und Transaktionsauthentifizierung von Personen an ihrem Telefon, deren Telefonnummer im System registriert wurde. Die Registrierung erfolgt dadurch, dass die Person das System von der zu registrierenden Telefonnummer aus anruft und die vom System generierten Anweisungen zum Registrieren einer zugehörigen PIN befolgt. Danach kann das System verwendet werden, um von diesen Personen eine Identitäts- und Transaktionsauthentifizierung zu erhalten. Dies umfasst das Anrufen der registrierten Telefonnummer der Person, von der eine Authentifizierung erforderlich ist. Bei Beantwortung des Anrufs werden dem Anrufempfänger durch automatisierte gesprochene Mittel Transaktionsdetails übermittelt, die eine Authentifizierung erfordern. Die korrekte Eingabe der registrierten PIN für diese Telefonnummer durch den Anrufempfänger authentifiziert die Identität des Anrufempfängers und die zugestellten Transaktionsdetails. Die PIN-Eingabe kann über DTMF (Dial Tone Multi-Frequency) oder ASR (Asynchronous Speech Recognition) erfolgen.

Das Dokument GB 2 406 925 A betrifft ein Verfahren zum Authentifizieren einer Transaktion durch eine Datenverarbeitungsvorrichtung mit einer Entität. Das Verfahren umfasst die Schritte des Erzeugens von Transaktionsdaten; Abrufen von Authentifizierungsdaten, die auf einem zugeordneten Speichermittel gespeichert sind, wobei der Speicher bei einem gemeinsamen System registriert ist; und einen Transaktionsmanager, wobei die Transaktionsdaten und Authentifizierungsdaten über den Transaktionsmanager an das gemeinsame System übertragen werden. Das System kann ein Telekommunikationssystem wie ein Mobil- oder Mobilfunknetz sein. Das Authentifizierungsspeichermittel ist eine Smartcard oder SIM und kann auch zur Authentifizierung des Terminals im Telekommunikationssystem verwendet werden.

### Zusammenfassung

Aufgabe der Erfindung ist es, ein Verfahren und eine Vorrichtung zum Ausgeben von vertraulichen Daten über eine Ausgabeeinrichtung eines Festnetztelefons anzugeben. Eine weitere Aufgabe ist es, eine Technologie zu schaffen, die eine sichere Zwei-Faktor-Authentifizierung ermöglicht.

Zur Lösung sind ein Verfahren und eine Vorrichtung zum Ausgeben von vertraulichen Daten über eine Ausgabeeinrichtung eines Festnetztelefons nach den unabhängigen Ansprüchen 1 und 10 geschaffen. Ausgestaltungen sind Gegenstand von abhängigen Unteransprüchen.

Nach einem Aspekt ist ein Verfahren zum Ausgeben von vertraulichen Daten über eine Ausgabeeinrichtung eines Festnetztelefons geschaffen. Bei dem Verfahren werden vertrauliche Daten in einer ersten Datenverarbeitungseinrichtung bereitgestellt, die einem Dienstleister zugeordnet ist, wobei die vertraulichen Daten einem personalisierten Datenverarbeitungsvorgang in der ersten Datenverarbeitungseinrichtung zugeordnet sind. Die vertraulichen Daten werden in einer Speichereinrichtung gespeichert, aus der zumindest die erste Datenverarbeitungseinrichtung Daten abrufen kann. In der ersten Datenverarbeitungseinrichtung werden Geheimdaten bereitgestellt, die ein zwischen dem Dienstleister und einer Person, welcher der personalisierte Datenverarbeitungsvorgang zugeordnet ist, vereinbartes Geheimnis repräsentieren. Von der ersten Datenverarbeitungseinrichtung werden Nachrichtendaten an eine zweite Datenverarbeitungseinrichtung übertragen, die einem Nachrichten-Dienstleister zugeordnet und eingerichtet ist, empfangene Nachrichtendaten an ein oder mehrere Festnetztelefone eines Netzwerks von Festnetztelefonen zu übertragen. Die Nachrichtdaten umfassen Folgendes: die vertraulichen Daten, die Geheimdaten sowie Empfängerdaten, die als Empfangsgerät ein Festnetztelefon in dem Netzwerk von Festnetztelefonen angeben. Über das Festnetztelefon wird als Reaktion auf ein Auswerten der Nachrichtendaten durch die zweite Datenverarbeitungseinrichtung das Geheimnis abgefragt. Im Festnetztelefon werden über eine Eingabeeinrichtung des Festnetztelefons Nutzereingabedaten empfangen. Die Nutzereingabedaten werden von dem Festnetztelefon an die zweite Datenverarbeitungseinrichtung übertragen und dort ausgewertet. Die vertraulichen Daten werden von der zweiten Datenverarbeitungseinrichtung an das Festnetztelefon übertragen, wenn beim Auswerten festgestellt wird, dass die Nutzereingabedaten das zwischen dem Dienstleister und dem Nutzer vereinbarte Geheimnis korrekt angeben. Die vertraulichen Daten werden über eine Ausgabeeinrichtung des Festnetztelefons ausgegeben.

Nach einem weiteren Aspekt ist eine Vorrichtung zum Ausgeben von vertraulichen Daten über eine Ausgabeeinrichtung eines Festnetztelefons nach dem Verfahren geschaffen, wobei die Vorrichtung eine erste Datenverarbeitungseinrichtung, eine zweite Datenverarbeitungseinrichtung, eine Speichereinrichtung und ein Netzwerk von Festnetztelefonen aufweist, die eingerichtet sind, mit der zweiten Datenverarbeitungseinrichtung elektronische Daten auszutauschen. Die zweite Datenverarbeitungseinrichtung ist eingerichtet, mit der ersten Datenverarbeitungseinrichtung elektronische Daten auszutauschen. Die Speichereinrichtung ist eingerichtet, zumindest mit der ersten Datenverarbeitungseinrichtung elektronische Daten auszutauschen.

Mit Hilfe der vorgeschlagenen Technologie ist es ermöglicht, über das Festnetztelefon die vertraulichen Daten nur der Person zur Kenntnis zu bringen, welche das zwischen der Person und dem Dienstleister (zuvor) vereinbarte Geheimnis kennt und mittels der Nutzereingabe am Festnetztelefon korrekt eingibt. Damit ist auch in Anwendungen, bei denen dem Nutzer oder der Person kein persönlich zugeordnetes Mobiltelefon zur Verfügung steht, die Möglichkeit geschaffen, die vertraulichen Daten personenbezogen auszugeben, also nur dann, wenn die zuvor über das Festnetztelefon empfangene Nutzereingabedaten das Geheimnis korrekt angeben.

Das Geheimnis kann zuvor in einem Registrierungsprozess zwischen der Person und dem Dienstleister vereinbart sein. Derartige Registrierungsprozesse, zum Beispiel ein Anmeldeprozess für das Online-Banking eines Bankdienstleisters, sind in verschiedenen Ausführungsformen als solche bekannt. Charakteristisch für den Registrierungsprozess ist, dass zwischen dem Dienstleister und der Person ein Geheimnis vereinbart wird, welches die Person dann in Verbindung mit einer oder verschiedenen Online-Dienstleistungen nutzen kann, um sich zu authentifizieren, beispielsweise im Rahmen einer Zwei-Faktor-Authentifizierung.

Bei dem vorgeschlagenen Verfahren wertet die zweite Datenverarbeitungseinrichtung nach dem Empfangen die Nachrichtendaten aus und bestimmt die vertraulichen Daten, die Geheimdaten und die Empfängerdaten, welche ein ausgewähltes Festnetztelefon als Empfangsgerät in dem Netzwerk angeben. Als Reaktion hierauf fordert die zweite Datenverarbeitungseinrichtung dann über das als Empfangsgerät bestimmte Festnetztelefon die Person auf, eine Nutzereingabe zu machen, die das Geheimnis angibt. Die Aufforderung an die das Festnetztelefon nutzende Person kann als Anzeige- und / oder Sprachnachricht ausgegeben werden. Wenn die hierauf empfangene Nutzereingabe das Geheimnis korrekt angibt, übermittelt die zweite Datenverarbeitungseinrichtung die vertraulichen Daten an das Festnetztelefon, wo diese ausgegeben werden.

Die das Festnetztelefon nutzende Person kann die Nutzereingabe über eine Tastatur des Festnetztelefons und / oder ein berührungsempfindliches Display des Festnetztelefons eingeben.

Alternativ oder ergänzend kann vorgesehen sein, die Nutzereingabedaten als Spracheingabe zu empfangen und die Spracheingabe mittels einer Spracherkennung auszuwerten, um aus den Nutzereingabedaten Daten zu bestimmen, die von der zweiten Datenverarbeitungseinrichtung zum Vergleich mit den Geheimdaten, welche das vereinbarte Geheimnis angeben, herangezogen werden können.

Die Geheimdaten können als Geheimnis eine Zeichenfolge repräsentieren, die Zeichen aus der folgenden Gruppe umfasst: Zahlen, Buchstaben und Sonderzeichen. Bei der Zeichenfolge kann es sich um eine alphanummerische Zeichenfolge handeln. Beispielsweise kann die Zeichenfolge ein Passwort oder eine Passwortphrase sein.

Die zweite Datenverarbeitungseinrichtung kann das Übertragen der vertraulichen Daten an das Festnetztelefon blockieren, wenn beim Auswerten festgestellt wird, dass die Nutzereingabedaten das zwischen dem Dienstleister und dem Nutzer vereinbarte Geheimnis nicht korrekt angeben. Wenn die zweite Datenverarbeitungseinrichtung nach dem Empfangen der Nutzereingabedaten beim Auswerten feststellt, dass diese das abgefragte Geheimnis nicht korrekt angeben, verhindert die zweite Datenverarbeitungseinrichtung, dass die vertrauliche Daten an das Festnetztelefon übermittelt werden. Es kann vorgesehen sein, dass die zweite Datenverarbeitungseinrichtung hierauf zumindest die vertraulichen Daten in der zweiten Datenverarbeitungseinrichtung löscht, wahlweise ergänzend die Geheimdaten und / oder die Empfängerdaten.

In der zweiten Datenverarbeitungseinrichtung können Berichtsdaten bereitgestellt und an die erste Datenverarbeitungseinrichtung übertragen werden, wobei die Berichtsdaten wenigstens eines der folgenden Ereignisse anzeigen: Geheimnis wurde nicht erfolgreich abgefragt; die vertraulichen Daten wurden nicht an das Festnetztelefon übertragen und die vertraulichen Daten wurden nicht über die Ausgabeeinrichtung des Festnetztelefons ausgegeben. Auf diese Weise wird die erste Datenverarbeitungseinrichtung informiert, inwieweit die von der ersten Datenverarbeitungseinrichtung angeforderte und von der zweiten Datenverarbeitungseinrichtung auszuführende Übermittlung der vertraulichen Daten an das Festnetztelefon erfolgreich war oder nicht. Als Reaktion hierauf können in der ersten Datenverarbeitungseinrichtung wahlweise Sicherheitsmaßnahmen veranlasst werden, beispielsweise das Löschen oder das Ändern des Geheimnisses. Es kann dann vorgesehen sein, dass mit der Person ein neues Geheimnis vereinbart wird, beispielsweise im Rahmen eines erneuten Registrierungsprozesses.

Die erste Datenverarbeitungseinrichtung kann als Reaktion auf das Empfangen und das Auswerten der Berichtsdaten den personalisierten Datenverarbeitungsvorgang abbrechen. Bei dieser Ausführungsform bewirken die Berichtsdaten in der ersten Datenverarbeitungseinrichtung einen Abbruch des personalisierten Datenverarbeitungsvorgangs, beispielsweise den Abbruch eines angeforderten Überweisungsvorgangs im Rahmen einer Applikation des Online-Bankings. Die erste Datenverarbeitungseinrichtung erkennt, dass das von ihr angeforderte Übermitteln der vertraulichen Daten unter Absicherung der Übermittlung mit Hilfe des Geheimnisses (Geheimdaten) nicht erfolgreich war und veranlasst hierauf entsprechende Sicherheitsmaßnahmen, insbesondere den Abbruch des personalisierten Datenverarbeitungsvorgangs.

Der personalisierte Datenverarbeitungsvorgang kann eine Zwei-Faktor-Authentifizierung umfassen, und die vertraulichen Daten können an die Person, welcher der personalisierte Datenverarbeitungsvorgang zugeordnet ist, zu übermittelnde Authentifizierungsdaten für die Zwei-Faktor-Authentifizierung repräsentieren, wobei die Authentifizierungsdaten für die erste Datenverarbeitungseinrichtung abrufbar gespeichert sind. Eine Zwei-Faktor-Authentifizierung kann beispielsweise vorsehen, dass sich die Person im Rahmen einer Online-Applikation mit Namen und Passwort bei der ersten Datenverarbeitungseinrichtung anmeldet. Anschließend wird im Rahmen der Applikation nach vertraulichen Daten gefragt, beispielsweise einer Transaktionsnummer oder einer (weiteren) persönlichen Identifikationsnummer. Die vertraulichen Daten erhält die Person über einen anderen Datenkommunikationskanal, also nicht den Datenkommunikationskanal, der für den Datenaustausch zur Eingabe des Namens und des Passworts genutzt wurde. Es ist vorgesehen, das Geheimnis über das Festnetztelefon zu übermitteln. Wenn die Person die vertraulichen Daten, die zuvor in der ersten Datenverarbeitungseinrichtung bereitgestellt wurden, wieder an diese als zweiten Faktor zurückgegeben hat, können diese dort geprüft werden. Die Übermittlung kann zum Beispiel über das Internet erfolgen. Dieser zweite Faktor ergänzt den ersten Faktor, nämlich die Authentifizierung der Person anhand des Namens und des Passworts. Solche Zwei-Faktor-Authentifizierungen werden in verschiedenen Online-Applikationen verwendet, beispielsweise dem Online-Banking. Es ist so ein Verfahren zur sicheren Zwei-Faktor-Authentifizierung geschaffen, welches das Verfahren zum Ausgeben der vertraulichen Daten über die Ausgabeeinrichtung des Festnetztelefons umfasst.

In der ersten Datenverarbeitungseinrichtung können weitere Nutzereingabedaten empfangen und ausgewertet werden, wobei hierbei im Rahmen der Zwei-Faktor-Authentifizierung die weiteren Nutzereingabedaten mit den gespeicherten Authentifizierungsdaten verglichen werden. Die weiteren Nutzereingabedaten können beispielsweise über einen Personalcomputer oder ein mobiles Gerät der Person empfangen werden, zum Beispiel über das Internet, insbesondere über das Gerät, mit dem sich die Person zuvor bereits für die Online-Applikation auf der ersten Datenverarbeitungseinrichtung angemeldet hat. Eine Dateneingabe oder -ausgabe erfolgt hierbei zum Beispiel über einen Browser-Client, der auf dem Gerät des Nutzers als Benutzerschnittstelle dient.

Die vertraulichen Daten können von der zweiten Datenverarbeitungseinrichtung an das Festnetztelefon mittels mindestens einer Text-Kurznachricht übertragen werden. Nachdem die zweite Datenverarbeitungseinrichtung aus den empfangenen Nachrichtendaten die vertraulichen Daten bestimmt hat, wird eine Text-Kurznachricht erzeugt, die die vertraulichen Daten umfasst. Ein Beispiel für einen Kurznachrichten-Dienst sind die sogenannten SMS-Nachrichten (SMS - Short Message Service).

Die Nachrichtendaten können als kryptografisch gesicherte Daten von der ersten an die zweite Datenverarbeitungseinrichtung übertragen werden. Zur kryptografischen Absicherung der Übertragung der Nachrichtendaten kann beispielsweise vorgesehen sein, dass diese verschlüsselt übermittelt werden. Verschlüsselungsmechanismen und -algorithmen sind als solche in verschiedenen Ausführungsformen für unterschiedliche Datenkommunikationen bekannt.

In Verbindung mit der Vorrichtung zum Ausgeben von vertraulichen Daten können die vorangehend im Zusammenhang mit dem Verfahren erläuterten Ausgestaltungen entsprechend vorgesehen sein.

### Beschreibung von Ausführungsbeispielen

Nachfolgend werden weitere Ausführungsbeispiele unter Bezugnahme auf Figuren einer Zeichnung erläutert. Hierbei zeigen:
- Fig. 1: eine schematische Darstellung einer Vorrichtung mit Datenverarbeitungseinrichtungen und einem Festnetztelefon und
- Fig. 2: eine schematisches Ablaufdiagramm für ein Verfahren zum Ausgeben von vertraulichen Daten über eine Ausgabeeinrichtung des Festnetztelefons.

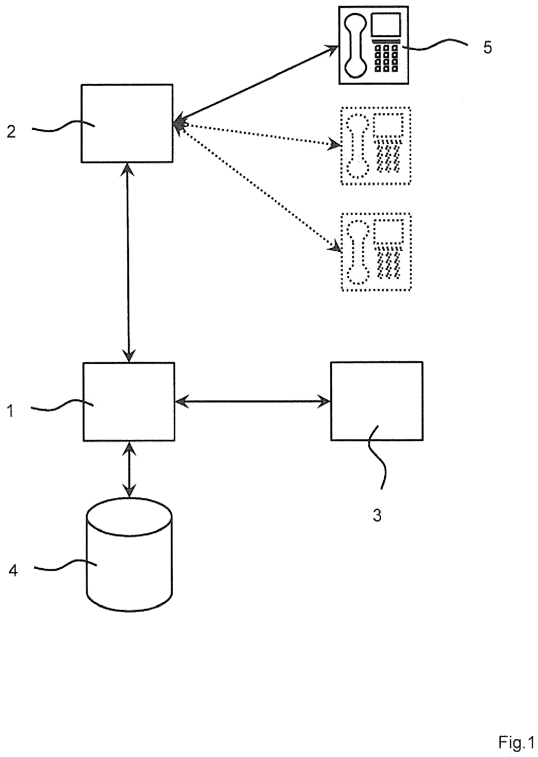

Fig. 1 zeigt eine schematische Darstellung eines Systems oder einer Vorrichtung mit einer ersten Datenverarbeitungseinrichtung 1 und einer zweiten Datenverarbeitungseinrichtung 2, zwischen denen elektronische Daten ausgetauscht werden können. Die erste Datenverarbeitungseinrichtung ist einem Dienstleister zugeordnet, beispielsweise einem Bank-Dienstleister oder einem Signatur-Dienstleister. Entsprechend sind eine oder mehrere Online-Applikationen auf der ersten Datenverarbeitungseinrichtung 1 implementiert und für eine Person über eine der Person zugeordnete dritte Datenverarbeitungseinrichtung 3 auf- und abrufbar. Auf der dritten Datenverarbeitungseinrichtung 3 kann zu diesem Zweck ein Browser-Client installiert sein, der der Person eine Datenkommunikation mit der ersten Datenverarbeitungseinrichtung 1 des Dienstleisters ermöglicht, beispielsweise über das Internet. Die Person kann über die dritte Datenverarbeitungseinrichtung 3, insbesondere einen persönlichen Personalcomputer oder ein persönliches Mobilgerät, Daten empfangen und übertragen.

Die erste und die zweite Datenverarbeitungseinrichtung 1, 2 sind jeweils mittels üblicher Hardware-Komponenten ausgebildet, beispielweise einer jeweiligen Servereinrichtung, auf denen Software-Komponenten implementiert sind, um die jeweils notwendigen Funktionalitäten für das Verfahren in seinen unterschiedlichen Ausführungen bereitzustellen.

Bei der Vorrichtung in Fig. 1 ist weiterhin eine Speichereinrichtung 4 vorgesehen, in der zumindest die erste Datenverarbeitungseinrichtung 1 Daten speichern und diese von dort abrufen kann.

Die zweite Datenverarbeitungseinrichtung 2 ist mit einem Festnetztelefon 5 verbunden. Es können mehrere Festnetztelefone in einem Netzwerk an die zweite Datenverarbeitungseinrichtung 2 koppeln, zumindest zeitweise. Die zweite Datenverarbeitungseinrichtung 2 ist einem Nachrichten-Dienstleister zugeordnet, derart, dass die zweite Datenverarbeitungseinrichtung 2 eingerichtet ist, ausgehend von empfangenen Daten Nachrichten zu erzeugen und an ein oder mehrere Festnetztelefone zu übermitteln, beispielsweise das Festnetztelefon 5. Zur Übermittlung der Nachrichten können zum Beispiel Text-Kurznachrichten genutzt werden, zum Beispiel sogenannte SMS-Nachrichten.

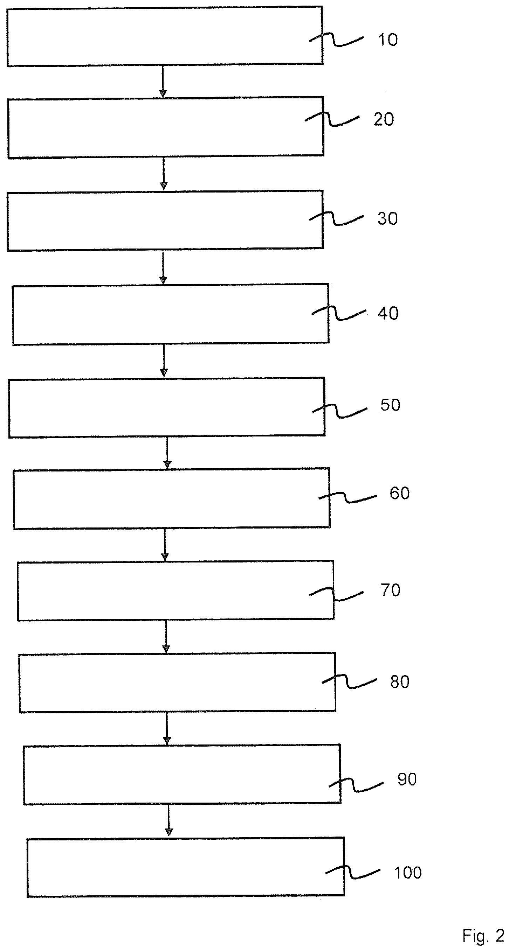

Mittels der Vorrichtung aus Fig. 1 kann ein Verfahren zum Übertragen und zum Ausgeben von vertraulichen Daten über eine Ausgabeeinrichtung des Festnetztelefons 5 ausgeführt werden, beispielweise im Rahmen einer Zwei-Faktor-Authentifizierung, was nachfolgend unter Bezugnahme auf das schematische Ablaufdiagramm in Fig. 2 beispielhaft erläutert wird.

In der ersten Datenverarbeitungseinrichtung 1 werden in einem Schritt 10 vertrauliche Daten bereitgestellt. Die vertraulichen Daten können in der ersten Datenverarbeitungseinrichtung 1 erzeugt oder hier von einer anderen Datenverarbeitungseinrichtung empfangen werden. Die vertraulichen Daten sind in der ersten Datenverarbeitungseinrichtung 1 einem personalisierten Datenverarbeitungsvorgang für die Person zugeordnet. Beispielsweise kann es sich um das Ausführen eines Datenverarbeitungsvorgangs im Rahmen eines Online-Bankings handeln, für das sich die Person zuvor unter Nutzung der dritten Datenverarbeitungseinrichtung 3 bei der ersten Datenverarbeitungseinrichtung 1 angemeldet hat. Dem personalisierten Datenverarbeitungsvorgang kann ein Registrierungsprozess vorausgegangen sein, innerhalb dessen sich die Person bei dem Dienstleister, dem die erste Datenverarbeitungseinrichtung 1 zugeordnet ist, als Nutzer registriert hat, zum Beispiel als Nutzer des Online-Bankings oder eines Signatur-Services. Im Rahmen der Registrierung haben der Dienstleister und der Nutzer ein Geheimnis vereinbart, beispielsweise eine persönliche Identifikationsnummer, ein Passwort oder eine Passwortphrase.

Im Schritt 20 werden die vertraulichen Daten in der Speichereinrichtung 4 gespeichert, so dass sie zumindest von der ersten Datenverarbeitungseinrichtung 1 abrufbar sind. Bei den vertraulichen Daten handelt es sich beispielsweise um eine Transaktionsnummer die auf die Anforderung einer Überweisung im Rahmen des Online-Bankings in der ersten Datenverarbeitungseinrichtung 1 dem Überweisungsvorgang und der Person, die sich fürs Online-Banking angemeldet hat, zugeordnet wurde.

Sodann werden im Schritt 30 Geheimdaten in der ersten Datenverarbeitungseinrichtung 1 bereitgestellt, die das zwischen dem Dienstleister und der Person vereinbarte Geheimnis repräsentieren, also zum Beispiel die persönliche Identifikationsnummer angeben.

Im Schritt 40 werden Nachrichtendaten in der ersten Datenverarbeitungseinrichtung 1 erzeugt und an die zweite Datenverarbeitungseinrichtung 2 übermittelt. Die Nachrichtendaten geben zum Beispiel Folgendes an: Die vertraulichen Daten, die Geheimdaten sowie Empfängerdaten, die das Festnetztelefon 5 als Empfangsgerät für eine Nachricht identifizieren, die die vertraulichen Daten umfasst. Die erste Datenverarbeitungseinrichtung 1 stellt hierdurch an die zweite Datenverarbeitungseinrichtung 2 die Anforderung, Informationen über die vertraulichen Daten an das Festnetztelefon 5 zu übermitteln, wobei die zweite Datenverarbeitungseinrichtung 2 beim Auswerten der empfangenen Nachrichtendaten feststellt, dass diese das Geheimnis repräsentierende Geheimdaten umfassen, was anzeigt, dass eine Nachricht mit den vertraulichen Daten an das Festnetztelefon 5 erst übermittelt werden soll, wenn eine Prüfung der Geheimdaten stattgefunden hat. Daher fragt die zweite Datenverarbeitungseinrichtung im Schritt 50 das Geheimnis über das Festnetztelefon 5 als Reaktion auf das Auswerten der Nachrichtendaten ab.

Um die zweite Datenverarbeitungseinrichtung 2 anzuzeigen, dass die vertraulichen Daten nur nach Abfrage des Geheimnisses ans Festnetztelefon 5 übertragen werden dürfen, können die Nachrichtendaten gesonderte Informationsdaten umfassen, die die zweite Datenverarbeitungseinrichtung 2 auswertet. Ein solches Anzeigen der bedingten Übertragung der vertraulichen Daten ans Festnetztelefon 5 kann der zweiten Datenverarbeitungseinrichtung 2 zum Beispiel mittels eines gesonderten Steuerbits in den Nachrichtendaten angezeigt werden.

Im Schritt 60 werden in dem Festnetztelefon 5 Nutzereingabedaten empfangen, die die Person über eine Eingabeeinrichtung des Festnetztelefons 5 eingibt, beispielsweise die Tastatur oder eine berührungsempfindliche Anzeige. Alternativ oder ergänzend kann vorgesehen sein, dass die Nutzereingabedaten als Sprachnachricht empfangen werden. Mit Hilfe einer Spracherkennung können aus der Sprachnachricht Informationen gewonnen werden, die dann auswertbar sind durch die zweite Datenverarbeitungseinrichtung.

Die Nutzereingabedaten werden dann vom Festnetztelefon 5 an die zweite Datenverarbeitungseinrichtung 2 übermittelt, wahlweise nach einer Vorverarbeitung der Nutzereingabedaten in dem Festnetztelefon 5, beispielsweise mittels der Spracherkennung (Schritt 70). Im Schritt 80 werden die Nutzereingabedaten durch die zweite Datenverarbeitungseinrichtung ausgewertet. Gemäß Schritt 90 werden die vertraulichen Daten von der zweiten Datenverarbeitungseinrichtung an das Festnetztelefon 5 übertragen, wenn beim Auswerten festgestellt wird, dass die Nutzereingabedaten das zwischen dem Dienstleister und der Person vereinbarte Geheimnis korrekt angeben, die Nutzereingabedaten also beispielsweise die persönlichen Identifikationsnummer der Person korrekt anzeigen. Danach können die vertraulichen Daten über eine Ausgabeeinrichtung des Festnetztelefons 5 ausgegeben werden (Schritt 100). Die Übermittlung der vertraulichen Daten von der zweiten Datenverarbeitungseinrichtung 2 an das Festnetztelefon 5 erfolgt beispielsweise mit Hilfe einer Text-Kurznachricht, die von der zweiten Datenverarbeitungseinrichtung 2 erzeugt wird.

Das vorangehend beschriebene Verfahren kann im Rahmen einer Zwei-Faktor-Authentifizierung für die Person gegenüber der ersten Datenverarbeitungseinrichtung 1 ausgeführt werden. Die über das Festnetztelefon 5 von der Person empfangenen vertraulichen Daten entsprechen hierbei einem zweiten Faktor des Authentifizierungsprozesses, nach den sich die Person zuvor beispielsweise unter Eingabe ihres Namens und einer PIN (erster Faktor) im Rahmen einer Online-Applikation in der ersten Datenverarbeitungseinrichtung 1 angemeldet haben.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Ausgeben von vertraulichen Daten über eine Ausgabeeinrichtung eines Festnetztelefons (5), mit:
- Bereitstellen der vertraulichen Daten in einer ersten Datenverarbeitungseinrichtung (1), die einem Dienstleister zugeordnet ist, wobei die vertraulichen Daten einem personalisierten Datenverarbeitungsvorgang in der ersten Datenverarbeitungseinrichtung (1) zugeordnet sind;
- Speichern der vertraulichen Daten in einer Speichereinrichtung (4), aus der zumindest die erste Datenverarbeitungseinrichtung (1) zum Abrufen von Daten befähigt ist;
- Bereitstellen von Geheimdaten, die ein zwischen dem Dienstleister und einer Person, welcher der personalisierte Datenverarbeitungsvorgang zugeordnet ist, vereinbartes Geheimnis repräsentieren, in der ersten Datenverarbeitungseinrichtung (1);
- Übertragen von Nachrichtendaten von der ersten Datenverarbeitungseinrichtung (1) an eine zweite Datenverarbeitungseinrichtung (2), die einem Nachrichten-Dienstleister zugeordnet und eingerichtet ist, empfangene Nachrichtendaten an ein oder mehrere Festnetztelefone eines Netzwerks von Festnetztelefonen zu übertragen, wobei die Nachrichtendaten Folgendes umfassen:
- die vertraulichen Daten,
- die Geheimdaten und
- Empfängerdaten, die als Empfangsgerät ein Festnetztelefon (5) in dem Netzwerk von Festnetztelefonen angeben;
- Abfragen des Geheimnisses über das Festnetztelefon (5) als Reaktion auf ein Auswerten der Nachrichtendaten durch die zweite Datenverarbeitungseinrichtung (2);
- Empfangen von Nutzereingabedaten in dem Festnetztelefon (5) über eine Eingabeeinrichtung des Festnetztelefons;
- Übertragen der Nutzereingabedaten von dem Festnetztelefon (5) an die zweite Datenverarbeitungseinrichtung (2);
- Auswerten der Nutzereingabedaten durch die zweite Datenverarbeitungseinrichtung (2);
- Übertragen der vertraulichen Daten von der zweiten Datenverarbeitungseinrichtung (2) an das Festnetztelefon (5), wenn beim Auswerten festgestellt wird, dass die Nutzereingabedaten das zwischen dem Dienstleister und der Person vereinbarte Geheimnis korrekt angeben; und
- Ausgeben der vertraulichen Daten über eine Ausgabeeinrichtung des Festnetztelefons (5).

2. Verfahren nach Anspruch 1, **dadurch gekennzeichnet, dass** die Geheimdaten als Geheimnis eine Zeichenfolge repräsentieren, die Zeichen aus der folgenden Gruppe umfasst: Zahlen, Buchstaben und Sonderzeichen.

3. Verfahren nach Anspruch 1 oder 2, **dadurch gekennzeichnet, dass** die zweite Datenverarbeitungseinrichtung (2) das Übertragen der vertraulichen Daten an das Festnetztelefon (5) blockiert, wenn beim Auswerten festgestellt wird, dass die Nutzereingabedaten das zwischen dem Dienstleister und dem Nutzer vereinbarte Geheimnis nicht korrekt angeben.

4. Verfahren nach mindestens einem der vorangehenden Ansprüche, **dadurch gekennzeichnet, dass** in der zweiten Datenverarbeitungseinrichtung (2) Berichtsdaten bereitgestellt und an die erste Datenverarbeitungseinrichtung (1) übertragen werden, wobei die Berichtsdaten wenigstens eines der folgenden Ereignisse anzeigen:
- Geheimnis wurde nicht erfolgreich abgefragt;
- die vertraulichen Daten wurden nicht an das Festnetztelefon (5) übertragen und
- die vertraulichen Daten wurden nicht über die Ausgabeeinrichtung des Festnetztelefons (5) ausgegeben.

5. Verfahren nach Anspruch 4, **dadurch gekennzeichnet, dass** die erste Datenverarbeitungseinrichtung (1) als Reaktion auf ein Empfangen und Auswerten der Berichtsdaten den personalisierten Datenverarbeitungsvorgang abbricht.

6. Verfahren nach mindestens einem der vorangehenden Ansprüche, **dadurch gekennzeichnet, dass** der personalisierte Datenverarbeitungsvorgang eine Zwei-Faktor-Authentifizierung umfasst und die vertraulichen Daten an die Person, welcher der personalisierte Datenverarbeitungsvorgang zugeordnet ist, zu übermittelnde Authentifizierungsdaten für die Zwei-Faktor-Authentifizierung repräsentieren, wobei die Authentifizierungsdaten für die erste Datenverarbeitungseinrichtung (1) abrufbar gespeichert sind.

7. Verfahren nach Anspruch 6, **dadurch gekennzeichnet, dass** in der ersten Datenverarbeitungseinrichtung (1) weitere Nutzereingabedaten empfangen und ausgewertet werden, wobei hierbei im Rahmen der Zwei-Faktor-Authentifizierung die weiteren Nutzereingabedaten mit den gespeicherten Authentifizierungsdaten verglichen werden.

8. Verfahren nach mindestens einem der vorangehenden Ansprüche, **dadurch gekennzeichnet, dass** die vertraulichen Daten von der zweiten Datenverarbeitungseinrichtung (2) an das Festnetztelefon (5) mittels mindestens einer Text-Kurznachricht übertragen werden.

9. Verfahren nach mindestens einem der vorangehenden Ansprüche, **dadurch gekennzeichnet, dass** die Nachrichtendaten als kryptografisch gesicherte Daten von der ersten an die zweite Datenverarbeitungseinrichtung (1, 2) übertragen werden.

10. Vorrichtung zum Ausgeben von vertraulichen Daten über eine Ausgabeeinrichtung eines Festnetztelefons (5), mit
- einer ersten Datenverarbeitungseinrichtung (1);
- einer zweiten Datenverarbeitungseinrichtung (2), die eingerichtet ist, mit der ersten Datenverarbeitungseinrichtung elektronische Daten auszutauschen;
- einer Speichereinrichtung (4), die eingerichtet ist, zumindest mit der ersten Datenverarbeitungseinrichtung (1) elektronische Daten auszutauschen; und
- einem Netzwerk von Festnetztelefonen, die eingerichtet sind, mit der zweiten Datenverarbeitungseinrichtung (2) elektronische Daten auszutauschen;
wobei die erste Datenverarbeitungseinrichtung, die zweite Datenverarbeitungseinrichtung (2), die Speichereinrichtung (4) und das Netzwerk von Festnetztelefonen eingerichtet sind, ein Verfahren nach mindestens einem der vorangehenden Ansprüche auszuführen.

## Claims

1. A method for outputting confidential data via an output device of a landline telephone (5), comprising:
- providing the confidential data in a first data-processing device (1) which is assigned to a service provider, wherein the confidential data are assigned to a personalized data-processing operation in the first data-processing device (1);
- storing the confidential data in a storage device (4), from which at least the first data-processing device (1) is capable of retrieving data;
- providing secret data which represent a secret agreed upon between the service provider and a person to whom the personalized data-processing operation is assigned, in the first data-processing device (1);
- transmitting message data from the first data-processing device (1) to a second data-processing device (2), which is assigned to a message service provider and is configured to transmit received message data to one or more landline telephones in a network of landline telephones, wherein the message data comprise the following:
- the confidential data,
- the secret data and
- receiver data which indicate a landline telephone (5) in the network of landline telephones as receiving device;
- querying the secret via the landline telephone (5) in response to an evaluation of the message data by the second data-processing device (2);
- receiving user input data in the landline telephone (5) via an input device of the landline telephone;
- transmitting the user input data from the landline telephone (5) to the second data-processing device (2);
- evaluating the user input data by the second data-processing device (2);
- transmitting the confidential data from the second data processing device (2) to the landline telephone (5), if it is determined during evaluation that the user input data correctly indicate the secret agreed upon between the service provider and the individual; and
- outputting the confidential data via an output device of the landline telephone (5).

2. The method according to claim 1, **characterized in that** the secret data represent as the secret a sequence of characters comprising characters from the following group: numbers, letters and special characters.

3. The method according to claim 1 or 2, **characterized in that** the second data-processing device (2) blocks the transmission of the confidential data to the landline telephone (5) if it is determined that the user input data does not correctly specify the secret agreed upon between the service provider and the user.

4. The method according to at least one of the preceding claims, **characterized in that** report data are supplied in the second data-processing device (2) and transmitted to the first data-processing device (1), wherein the report data indicate at least one of the following events:
- secret was not successfully queried;
- the confidential data were not transmitted to the landline telephone (5) and
- the confidential data were not output via the output device of the landline telephone (5).

5. The method according to claim 4, **characterized in that** the first data-processing device (1) terminates the personalized data-processing operation in response to receiving and evaluating the report data.

6. The method according to at least one of the preceding claims, **characterized in that** the personalized data-processing operation comprises a two-factor authentication and the confidential data represent authentication data for the two-factor authentication to be transmitted to the individual assigned the personalized data-processing operation, wherein the authentication data are stored such that they can be retrieved by the first data-processing device (1).

7. The method according to claim 6, **characterized in that** further user input data are received and evaluated in the first data-processing device (1), wherein in this case the additional user input data are compared with the stored authentication data as part of the two-factor authentication.

8. The method according to at least one of the preceding claims, **characterized in that** the confidential data are transmitted from the second data-processing device (2) to the landline telephone (5) by means of at least one short text message.

9. The method according to at least one of the preceding claims, **characterized in that** the message data are transmitted as cryptographically secured data from the first to the second data-processing device (1, 2).

10. A device for outputting confidential data via an output device of a landline telephone (5), having
- a first data-processing device (1);
- a second data-processing device (2) which is configured to exchange electronic data with the first data-processing device;
- a memory device (4) which is configured to exchange electronic data at least with the first data-processing device (1); and
- a network of landline telephones which are configured to exchange electronic data with the second data-processing device (2);
wherein the first data-processing device, the second data-processing device (2), the storage device (4) and the network of landline telephones are configured to carry out a method according to at least one of the preceding claims.

## Revendications

1. Procédé d'émission de données confidentielles via un dispositif d'émission d'un téléphone fixe (5), comportant de :
- fournir les données confidentielles dans un premier dispositif de traitement de données (1) qui est affecté à un fournisseur de services, dans lequel les données confidentielles sont affectées à un traitement de données personnalisé dans le premier dispositif de traitement de données (1) ;
- mémoriser les données confidentielles dans un dispositif de mémoire (4), à partir duquel au moins le premier dispositif de traitement de données (1) est capable de récupérer des données ;
- fournir des données secrètes, qui représentent un secret convenu entre le fournisseur de services et une personne à qui l'opération de traitement de données personnalisé est attribuée, dans le premier dispositif de traitement de données (1) ;
- transmettre des données de message du premier dispositif de traitement de données (1) à un deuxième dispositif de traitement de données (2), qui est attribué à un fournisseur de services de messagerie et configuré pour transmettre des données de message reçues à un ou plusieurs téléphones fixes dans un réseau de téléphones fixes, dans lequel les données de message comprennent les éléments suivants :
- les données confidentielles,
- les données secrètes et
- des données de destinataire, qui spécifient un téléphone fixe (5) dans le réseau de téléphones fixes en tant que dispositif de réception ;
- interroger le secret via le téléphone fixe (5) en réponse à une évaluation des données de message par le deuxième dispositif de traitement de données (2) ;
- recevoir des données d'entrée d'utilisateur dans le téléphone fixe (5) via un dispositif d'entrée du téléphone fixe ;
- transmettre des données d'entrée d'utilisateur du téléphone fixe (5) au deuxième dispositif de traitement de données (2) ;
- évaluer des données d'entrée utilisateur par le deuxième dispositif de traitement de données (2) ;
- transmettre des données confidentielles du deuxième dispositif de traitement de données (2) au téléphone fixe (5), s'il est déterminé lors de l'évaluation que les données saisies par l'utilisateur indiquent correctement le secret convenu entre le fournisseur de services et la personne ; et
- émettre les données confidentielles via un dispositif d'émission du téléphone fixe (5).

2. Procédé selon la revendication 1, **caractérisé en ce que** les données secrètes représentent une chaîne de caractères en tant que secret, qui comprend des caractères du groupe suivant : chiffres, lettres et caractères spéciaux.

3. Procédé selon la revendication 1 ou 2, **caractérisé en ce que** le deuxième dispositif de traitement de données (2) bloque la transmission de données confidentielles vers le téléphone fixe (5), s'il est déterminé lors de l'évaluation que les données d'entrée d'utilisateur n'indiquent pas correctement le secret convenu entre le fournisseur de services et l'utilisateur.

4. Procédé selon au moins une des revendications précédentes, **caractérisé en ce que** des données de rapport sont fournies dans le deuxième dispositif de traitement de données (2) et transmises au premier dispositif de traitement de données (1), dans lequel les données de rapport indiquent au moins un des événements suivants :
- le secret n'a pas été interrogé avec succès ;
- les données confidentielles n'ont pas été transmises au téléphone fixe (5) et
- les données confidentielles n'ont pas été émises via le dispositif d'émission du téléphone fixe (5).

5. Procédé selon la revendication 4, **caractérisé en ce que** le premier dispositif de traitement de données (1) interrompt l'opération de traitement de données personnalisé en réponse à la réception et à l'évaluation des données de rapport.

6. Procédé selon au moins une des revendications précédentes, **caractérisé en ce que** le traitement personnalisé des données comprend une authentification à deux facteurs et les données confidentielles représentent les données d'authentification à transmettre en vue de l'authentification à deux facteurs à la personne à qui une opération de traitement de données personnalisée est attribuée, dans lequel les données d'authentification pour le premier dispositif de traitement de données (1) sont mémorisées de manière récupérable.

7. Procédé selon la revendication 6, **caractérisé en ce que** d'autres données d'entrée d'utilisateur sont reçues et évaluées dans le premier dispositif de traitement de données (1), dans lequel les autres données d'entrée d'utilisateur sont comparées dans le cadre de l'authentification à deux facteurs avec les données d'authentification mémorisées.

8. Procédé selon au moins une des revendications précédentes, **caractérisé en ce que** les données confidentielles sont transmises du deuxième dispositif de traitement de données (2) au téléphone fixe (5) au moyen d'au moins un message de texte court.

9. Procédé selon au moins une des revendications précédentes, **caractérisé en ce que** les données de message sont transmises sous forme de données sécurisées cryptographiquement du premier au deuxième dispositif de traitement de données (1, 2).

10. Dispositif pour émettre des données confidentielles via un téléphone fixe (5), comportant
- un premier dispositif de traitement de données (1) ;
- un deuxième dispositif de traitement de données (2), qui est configuré avec le premier dispositif de traitement de données pour échanger des données électroniques ;
- un dispositif de mémorisation (4), qui est agencé pour échanger des données électroniques au moins avec le premier dispositif de traitement de données (1) ; et
- un réseau de téléphones fixes configuré pour échanger des données électroniques avec le deuxième dispositif de traitement de données (2) ;
dans lequel le premier dispositif de traitement de données, le deuxième dispositif de traitement de données (2), le dispositif de mémorisation (4) et le réseau de téléphones fixes sont agencés pour mettre en œuvre un procédé selon au moins une des revendications précédentes.
